# EUROPÄISCHE PATENTANMELDUNG

(11) **EP 1 674 146 A2**
(43) Veröffentlichungstag der Anmeldung: **28.06.2006**
(21) Anmeldenummer: 05025509.0
(22) Anmeldetag: 23.11.2005
(51) Int. Cl.: B01D 39/18

(54) **Filterhilfsmittel**

(30) Priorität: 24.12.2004 DE 102004062617
(71) Anmelder: KHS AG, 44143 Dortmund (DE)
(72) Erfinder: Evers, Hartmut, 55545 Bad Kreuznach (DE)

(57) **Zusammenfassung**

Ein Filterhilfsmittel zur Verwendung bei der Filtration von Flüssigkeiten, insbesondere bei der Filtration von Getränken, besteht aus einem Grundmaterial in Mischung mit einem Wirkstoff. Das Grundmaterial ist eine Cellulosefaser. Als Wirkstoffe sind wenigstens eine Cellulosefaser mit einer von dem Grundmaterial abweichenden durchschnittlichen Faserlänge und Faserdicke sowie ein Thixotropierungsmittel in Form von Polyethylenfasern verwendet.

## Beschreibung

Die Erfindung bezieht sich auf ein Filterhilfsmittel für die Filtration von Flüssigkeiten, insbesondere für die Filtration von Getränken, wie z. B. Bier, Fruchtsaft oder Wein.

Bekannt sind u.a. Filterelemente in Form von Filtermembranen, Membran-Tiefenfilter-Kombinationen oder Filterkörpern auf der Basis von Aramid (DE 33 42 823).

Bekannt sind weiterhin auch Filterhilfsmittel für die Filtration von Flüssigkeiten und dabei insbesondere für die Filtration von Getränken wie Bier, Fruchtsaft, Wein usw. Diese Filterhilfsmittel dienen dazu, auf dem Filter oder einer Filtermembrane einer Filteranordnung einen sogenannten Filterkuchen zu erzeugen, der von der zu filternden Flüssigkeit während der Filtration durchströmt wird. Nach Abschluss der Filtration oder aber periodisch in bestimmten Zeitintervallen muss der vorhandene Filterkuchen zur Erneuerung ausgetragen werden.

Aufgabe der Erfindung ist die Schaffung eines Filterhilfsmittels, welches sich in Filteranlagen in optimaler Weise für die Filtration von Flüssigkeiten, insbesondere auch von Getränken unterschiedlichster Art eignet. Zur Lösung dieser Aufgabe ist ein Filterhilfsmittel entsprechend dem Patentanspruch 1 ausgebildet.

Das erfindungsgemäße Filterhilfsmittel, welches in der jeweils verwendeten Filteranlage - eventuell auch mit weiteren Filterstoffen - auf einem dortigen Filter oder einer dortigen Filtermembrane usw. die für die Filtration erforderliche Filterschicht oder den entsprechenden Filterkuchen bildet und hierfür beispielsweise der zu filtrierenden Flüssigkeit zugegeben wird, ist im Wesentlichen eine Mischung aus einem Hauptbestandteil bzw. einem Füll- oder Grundmaterial G und aus mehreren Zusatz- oder Wirkstoffen, beispielsweise wenigstens vier Wirkstoffen W1 - W4. Das Grundmaterial G ist ein Fasermaterial in Form von hochreinen Cellulosefasern mit einem Celluloseanteil deutlich über 95 %, d. h. beispielsweise mit einem Celluloseanteil von 99,5 %, mit einer mittleren Faserlänge im Bereich zwischen etwa 180 und 220 µm und mit einer mittleren Faserdicke im Bereich zwischen etwa 18 - 22 µm. Dieses Fasermaterial bildet die Basis des jeweiligen Filterkuchens, in der die weiteren Zusatz- oder Wirkstoffen aufgenommen sind.

Auch ein Teil der Wirkstoffe, beispielsweise die Wirkstoffe W1 - W3 sind jeweils ein Fasermaterial in Form von hochreinen Cellulosefasern mit einem Celluloseanteil deutlich über 95 %, d. h. beispielsweise mit einem Celluloseanteil von 99,5 %.

Die mittlere Faserlänge der Cellulosefasern des Wirkstoffes W1, der ebenfalls als Füll- und Filterstoff im Filterkuchen dient, ist kleiner als die mittlere Faserlänge der Fasern des Grundmaterials G und liegt etwa im Bereich zwischen 115 und 145 µm, und zwar bei einer Faserdicke im Bereich von etwa 18 - 22 µm.

Die mittlere Faserlänge des Fasermaterials der Cellulosefasern des Wirkstoffes W2, der zur Auflockerung des Filterkuchens und damit zu einem höheren Durchsatz der Flüssigkeit beim Filtern dient, ist deutlich größer als die mittlere Faserlänge sowohl des Grundmaterials G als auch des Wirkstoffes W1 und liegt beispielsweise im Bereich zwischen 1980 und 2020 µm, und zwar bei einer gegenüber den Cellulosefasern des Grundmaterials G und des Wirkstoffes W1 deutlich größeren Faserdicke im Bereich zwischen 30 und 40 µm.

Die den Wirkstoff W 3 bildenden Cellulosefasern besitzen ebenfalls eine mittlere Faserlänge, die größer ist als die Faserlänge des Grundmaterials G und des Wirkstoffes W1. Die mittlere Faserlänge dieses Wirkstoffes W3, der u.a. dazu dient, Trübstoffe sowie auch Mikroorganismen bei der Filtration abzufangen bzw. zurückzuhalten, liegt im Bereich zwischen 540 und 660 µm, bei einer Faserdicke, die ebenfalls größer ist als die Faserdicke des Grundmaterials sowie des Wirkstoffes W1, und zwar bei einer mittleren Faserdicke im Bereich zwischen etwa 27 und 33 µm.

Als weiterer Wirkstoff W4 wird ein asbestfreies Thixotropierungsmittel verwendet, welches mit hoher Dichte aus sehr feinen Polyethylenfasern besteht und mit welchem einerseits ein Auflockern des Filterkuchens und damit ein verbesserter Durchsatz der Flüssigkeit beim Filtrieren, andererseits aber auch ein verbessertes Austragen des Filterkuchens aus der Filtervorrichtung nach Beendigung des Filtervorgangs erreicht wird. Die mittlere Faserlänge der Polyethylenfasern liegt bei diesem Wirkstoff W4 im Bereich zwischen 360 und 450 µm, und zwar bei einem Schüttgewicht bzw. bei einer Dichte von etwa 920 - 970 g/l. Das Thixotropierungsmittel besitzt weiterhin im Normal- oder Ruhezustand eine Viskosität, die größer ist als die Viskosität einer Flüssigkeit. Durch Scherbelastung, z.B. durch Umrühren wird eine Reduzierung der Viskosität erreicht, sodass das Thixotropierungsmittel dann bezüglich der Viskosität die Eigenschaften einer Flüssigkeit annimmt. Nach einer gewissen Ruhezeit stellt sich die höhere Viskosität wieder ein.

Die verschiedenen Bestandteile des Filterhilfsmittels sind nachstehend nochmals in einer Tabelle zusammengefasst.

**Tabelle 1**

| **Stoff** | **Stoffart** | **Cellulosegehalt [%]** | **∅ Faserlänge [µm]** | **∅ Faserdicke [µm]** | **Schüttgewicht [g/l]** |
|---|---|---|---|---|---|
| G | Cellulosefaser | > 95% | 180 - 220 | 18 - 22 | 100 - 150 |
| W1 | Cellulosefaser | > 95% | 115 - 145 | 18 - 22 | 130 - 200 |
| W2 | Cellulosefaser | > 95% | 1980 - 2020 | 30 - 40 | 15 - 30 |
| W3 | Cellulosefaser | > 95% | 540 - 660 | 27 - 33 | |
| W4 | Thixotropierungsmittel/Polyethylenfasern | | 360 - 450 | | 920 - 970 |

Als Grundmaterial G eignet sich bevorzugt eine Cellulosefaser, die auf dem Markt unter der Bezeichnung "ARBOCEL BER 40" erhältlich ist und deren Cellulosegehalt bei etwa 99,5 % liegt, und zwar bei einer durchschnittlichen Faserlänge von 200 µm, einer durchschnittlichen Faserdicke von 20 µm und einem Schüttgewicht von 110 - 145 g/l.

Als Wirkstoffe W1 - W4 eignen sich bei dem erfindungsgemäßen Filterhilfsmittel bevorzugt:
Als Wirkstoff W1 eine Cellulosefaser, die auf dem Markt unter der Bezeichnung "ARBOCEL B 800" erhältlich ist und deren Cellulosegehalt bei etwa 99,5 % liegt, und zwar bei einer durchschnittlichen Faserlänge von 130 µm, einer durchschnittlichen Faserdicke von 20 µm, mit einem Schüttgewicht von 150 - 180 g/l, mit einem Glührückstand (850°C, 4 h) von ca. 0,3% und mit einem pH-Wert von 6 +/- 1;
Als Wirkstoff W2 eine Cellulosefaser, die auf dem Markt unter der Bezeichnung "ARBOCEL FIF 400" erhältlich ist und deren Cellulosegehalt bei etwa 99,5 % liegt, und zwar bei einer durchschnittlichen Faserlänge von 2000 µm, mit einer durchschnittlichen Faserdicke von 35 µm, mit einem Schüttgewicht von 20 - 25 g/l, mit einem Glührückstand (850 °C, 4 h) von ca. 0,3% und mit einem pH-Wert von 6 +/- 1;
Als Wirkstoff W3 eine Cellulosefaser, die auf dem Markt unter der Bezeichnung "S 500" erhältlich ist und deren Cellulosegehalt bei etwa 99,5 % liegt, und zwar bei einer durchschnittlichen Faserlänge von 600 µm, mit einer durchschnittlichen Faserdicke von 30 µm, mit einem Glührückstand (850 °C, 4 h) von ca. 0,3% und mit einem pH-Wert von 6 +/- 1;
Als Wirkstoff W4 ein asbestfreies Thixotropierungsmittel, welches auf dem Markt unter der Bezeichnung "SYLOTHIX 51" erhältlich ist und aus sehr feinen Polyethylenfasern hoher Dichte (HDPE) besteht, und zwar mit einer mittleren Faserlänge von 400 µm, mit einem Schüttgewicht bzw. mit eine Dichte von etwa 950 g/l.

Die verschiedenen Bestandteile auch dieser Ausführung des erfindungsgemäßen Filterhilfsmittels sind nachstehend nochmals in einer Tabelle zusammengefasst.

**Tabelle 2**

| | Bezeichnung | Stoffart | Cellulosegehalt [%] | ∅ Faserlänge [µm] | ∅ Faserdicke [µm] | Schüttge-wicht [g/l] |
|---|---|---|---|---|---|---|
| G | ARBOCEL BER 40 | hochreine Cellulose | 99,5 | 200 | 20 | 110-145 |
| W1 | ARBOCEL B 800 | hochreine Cellulose | 99,5 | 130 | 20 | 150-180 |
| W2 | ARBOCEL FIF 400 | reine Cellulose | 99,5 | 2000 | 35 | 20-25 |
| W3 | S 500 | hochreine Cellulose | 99,5 | 600 | 30 | |
| W4 | SYLOTHIX 51 | Thixotropierungsmittel | 0 | 400 | | 950 |

Der Gesamtanteil des Grundmaterials G liegt bei dem erfindungsgemäßen Filterhilfsmittel bezogen auf das Gesamtgewicht des Filterhilfsmittels im Bereich zwischen etwa 65 - 95 Gewichts%, sodass der Gesamtanteil aller Wirkstoffe W1 - W4 in der von dem Grundmaterial und den Wirkstoffen gebildeten Mischung im Bereich zwischen etwa 5 - 35 Gewichts% liegt, und zwar wieder bezogen auf das Gesamtgewicht des Filterhilfsmittels.

Die Anteile der Wirkstoffe W1 - W4 sind unterschiedlich, und zwar derart, dass der Anteil des Wirkstoffs W1 etwas größer oder aber gleich dem Anteil des Wirkstoffs W2 ist, während der Anteil des Wirkstoffs W4 auf jeden Fall kleiner ist als der Anteil des Wirkstoffs W1 bzw. W2. Der Anteil des Wirkstoffs W4 beträgt beispielsweise etwa die Hälfte des Anteils der Wirkstoffe W1 bzw. W2. Der Wirkstoff W3 ist mit dem geringsten Anteil in der Gesamtmischung enthalten, und zwar etwa mit einem Viertel oder einem Fünftel des Anteils der Wirkstoffe W1 bzw. W2.

Bei einer möglichen Ausführungsform der Erfindung enthält das Filterhilfsmittel die Bestandteile G und W1 und W4 in folgender Zusammensetzung:

| | |
|---|---|
| Grundmaterial G | etwa 35 - 45 Gewichts% |
| Wirkstoff W1 | etwa 20 - 30 Gewichts% |
| Wirkstoff W2 | etwa 15 - 25 Gewichts% |
| Wirkstoff W3 | etwa 0 - 10 Gewichts% |
| Wirkstoff W4 | etwa 5 - 15 Gewichts%, |

wobei bei einer bevorzugten Ausführungsform das Filterhilfsmittel folgende Zusammensetzung aufweist:

| | |
|---|---|
| Grundmaterial G | etwa 40 Gewichts% |
| Wirkstoff W1 | etwa 25 Gewichts% |
| Wirkstoff W2 | etwa 20 Gewichts% |
| Wirkstoff W3 | etwa 5 Gewichts% |
| Wirkstoff W4 | etwa 10 Gewichts% |

Die Erfindung wurde voranstehend an Ausführungsbeispielen beschrieben. Es versteht sich, dass Änderungen sowie Abwandlungen möglich sind, ohne das dadurch der die Erfindung tragende Gedanke verlassen wird.

## Patentansprüche

1. Filterhilfsmittel zur Verwendung bei der Filtration von Flüssigkeiten, insbesondere bei der Filtration von Getränken, bestehend aus einem Grundmaterial (G) in Mischung mit Wirkstoffen (W1 - W4), **dadurch gekennzeichnet,**
**dass** das Grundmaterial (G) eine Cellulosefaser und die Wirkstoffe (W1 - W4) wenigstens eine Cellulosefaser mit einer von dem Grundmaterial (G) abweichenden durchschnittlichen Faserlänge und Faserdicke sowie ein Thixotropierungsmittel in Form von Polyethylenfasern sind.

2. Filterhilfsmittel nach Anspruch 1, **dadurch gekennzeichnet, dass** die als Grundmaterial (G) und/oder als Wirkstoff (W1 - W3) verwendete Cellulosefaser einen Celluloseanteil deutlich über 90%, beispielsweise einen Celluloseanteil von etwa 99,5% aufweist.

3. Filterhilfsmittel nach Anspruch 1 oder 2, **dadurch gekennzeichnet, dass** die als Grundmaterial (G) verwendete Cellulosefaser eine durchschnittliche Faserlänge von etwa 180 - 220 µm und eine durchschnittliche Faserdicke von etwa 18 - 22 µm aufweist.

4. Filterhilfsmittel nach einem der vorhergehenden Ansprüche, **dadurch gekennzeichnet, dass** es in Mischung mit dem Grundmaterial (G) wenigstens drei Cellulosefasern unterschiedlicher Faserlänge und Faserdicke als Wirkstoff (W1 - W3) enthält.

5. Filterhilfsmittel nach Anspruch 4, **dadurch gekennzeichnet, dass** als erster Wirkstoff (W1) eine Cellulosefaser mit einer mittleren Faserlänge im Bereich zwischen etwa 115 und 145 µm und mit einer durchschnittlichen Faserdicke im Bereich zwischen etwa 18 und 22 µm, als zweiter Wirkstoff (W2) eine Cellulosefaser mit einer durchschnittlichen Faserlänge im Bereich zwischen etwa 1980 und 2020 µm und einer durchschnittlichen Faserdicke im Bereich zwischen etwa 30 und 40 µm sowie als dritter Wirkstoff (W3) eine Cellulosefaser mit einer mittleren Faserlänge im Bereich zwischen etwa 540 und 660 µm und einer mittleren Faserdicke im Bereich zwischen etwa 27 und 33 µm verwendet sind.

6. Filterhilfsmittel nach Anspruch 5, **dadurch gekennzeichnet, dass** die den ersten Cellulosefaserwirkstoff (W1) bildende Cellulosefaser ein Schüttgewicht im Bereich zwischen 130 und 200 g/l aufweist.

7. Filterhilfsmittel nach Anspruch 5 oder 6, **dadurch gekennzeichnet, dass** die den zweiten Cellulosefaserwirkstoff (W2) bildende Cellulosefaser ein Schüttgewicht im Bereich von etwa 15 - 30 g/l aufweist.

8. Filterhilfsmittel nach einem der vorhergehenden Ansprüche, **dadurch gekennzeichnet, dass** es zusätzlich zu dem wenigstens einen von einer Cellulosefaser gebildeten Wirkstoff (W1- W3) als weiteren Wirkstoff (W4) das Thixotropierungsmittel in Form von Polyethylenfasern mit einer mittleren Faserlänge im Bereich zwischen etwa 360 und 450 µm enthält.

9. Filterhilfsmittel nach Anspruch 8, **dadurch gekennzeichnet, dass** die das Thixotropierungsmittel bildende Polyethylenfaser ein Schüttgewicht im Bereich zwischen 920 und 970 g/l aufweist.

10. Filterhilfsmittel nach einem der vorhergehenden Ansprüche, **dadurch gekennzeichnet, dass** die das Grundmaterial (G) bildende Cellulosefaser eine durchschnittliche Faserlänge von etwa 200 µm, eine durchschnittliche Faserdichte von etwa 20 µm und ein Schüttgewicht von etwa 110 - 145 g/l aufweist.

11. Filterhilfsmittel nach einem der vorhergehenden Ansprüche, **dadurch gekennzeichnet, dass** die den ersten Cellulosewirkstoff (W1) bildende Cellulosefaser eine durchschnittliche Faserlänge von etwa 130µm, eine durchschnittliche Faserdicke von etwa 20 µm und ein Schüttgewicht im Bereich zwischen etwa 150 und 180 g/l aufweist.

12. Filterhilfsmittel nach einem der vorhergehenden Ansprüche, **dadurch gekennzeichnet, dass** die den zweiten Cellulosefaserwirkstoff (W2) bildende Cellulosefaser eine mittlere Faserlänge von etwa 2000µ, eine mittlere Faserdicke von etwa 35µm und ein Schüttgewicht von etwa 20 bis 25 g/l aufweist.

13. Filterhilfsmittel nach einem der vorhergehenden Ansprüche, **dadurch gekennzeichnet, dass** die den dritten Cellulosefaserwirkstoff (W3) bildende Cellulosefaser eine mittlere Faserlänge von etwa 600 µm und eine mittlere Faserdicke von etwa 30 µm aufweist.

14. Filterhilfsmittel nach einem der vorhergehenden Ansprüche, **dadurch gekennzeichnet, dass** es das Grundmaterial (G) sowie die Wirkstoffe (W1 - W4) in folgender Zusammensetzung enthält:
| | | |
|---|---|---|
| Grundmaterial (G) | etwa 35 - 45 | Gewichts% |
| erster Cellulosefaserwirkstoff (W1) | etwa 20 - 30 | Gewichts% |
| zweiter Cellulosefaserwirkstoff (W2) | etwa 15 - 25 | Gewichts% |
| dritter Cellulosefaserwirkstoff (W3) | etwa 0 - 10 | Gewichts% |
| vierter Wirkstoff (W4) aus den Polyethylenfasern | etwa 5 - 15 | Gewichts%, |
und zwar jeweils bezogen auf das Gesamtgewicht des Filterhilfsmittels.

15. Filterhilfsmittel nach Anspruch 14, **dadurch gekennzeichnet,**
**dass** es das Grundmaterial (G) sowie die Wirkstoffe (W1 - W4) in folgenden Anteilen enthält:
| | | |
|---|---|---|
| Grundmaterial (G) | etwa 40 | Gewichts% |
| erster Cellulosefaserwirkstoff (W1) | etwa 25 | Gewichts% |
| zweiter Cellulosefaserwirkstoff (W2) | etwa 20 | Gewichts% |
| dritter Cellulosefaserwirkstoff (W3) | etwa 5 | Gewichts% |
| vierter Wirkstoff (W4) aus den Polyethylenfasern | etwa 10 | Gewichts%. |
und zwar jeweils bezogen auf das Gesamtgewicht des Filterhilfsmittels.
